# EUROPÄISCHE PATENTANMELDUNG

(11) **EP 1 271 306 A2**
(43) Veröffentlichungstag der Anmeldung: **02.01.2003**
(21) Anmeldenummer: 02014434.1
(22) Anmeldetag: 28.06.2002
(51) Int. Cl.: G06F 9/355

(54) **Konfigurierbare Adressierungsvorrichtung**

(30) Priorität: 28.06.2001 DE 10131124
(71) Anmelder: Infineon Technologies AG, 81669 München (DE)
(72) Erfinder: Junge, Stephan, 81549 M-nchen (DE); Sonnekalb, Steffen, 81673 M-nchen (DE); Wenzel, Andreas, 81373 M-nchen (DE)
(74) Vertreter: Reinhard - Skuhra - Weise & Partner

(57) **Zusammenfassung**

Vorrichtung zur Adressierung eines Datenspeichers (21), wobei die Vorrichtung (1) aufweist:

ein Befehlsregister (2) zum Zwischenspeichern eines Programmbefehls, der einen Befehls-Opcode, einen Speicherkonfigurationsauswahlzeiger (2b) zur Auswahl eines Speicherkonfigurationsregisterfeldes, Konfigurationsbits (2c) und Offset-Adressenbits (2d) umfasst, ein Speicherkonfigurationsregister (11), das mehrere Speicherkonfigurationsregisterfelder (11-i) umfasst, die verschiedene Abbildungsbefehle zur Generierung einer Datenspeicheradresse des Datenspeichers (21) speichern, mehreren Datenspeichersegmentregistern (14), die jeweils höherwertige Adressenbits einer Anfangsadresse eines Datenspeichersegments speichern, mindestens ein Zusatz-Datenspeichersegmentregister (16), das höherwertige Adressenbits einer Anfangsadresse eines Datenspeichersegments speichert, ein Schaltwerk (9), das in Abhängigkeit von dem aus dem Befehlsregister (2) ausgelesenen Speicherkonfigurationsauswahlzeiger den Abbildungsbefehl aus dem ausgewählten Speicherkonfigurationsregisterfeld (11-i) ausliest und entsprechend dem ausgelesenen Abbildungsbefehl und in Abhängigkeit von den aus dem Befehlsregister (2) ausgelesenen Konfigurationsbits (2c) die höherwertigen Adressenbits aus einem Datenspeichersegmentregister (14) oder einem Zusatz-Datenspeichersegmentregister (16) und aus den aus dem Befehlsregister (2) ausgelesenen Konfigurationsbits (2c) zusammengesetzt und in ein Adressregister (19), das eine Datenspeicheradresse zur Adressierung des Datenspeichers (21) zwischenspeichert, einschreibt, wobei die niedrigwertigen Adressenbits des Adressregisters (19) aus den in dem Befehlsregister (2) zwischengespeicherten Offset-Adressenbits (2d) entnommen werden.

## Beschreibung

Die Erfindung betrifft eine konfigurierbare Adressierungsvorrichtung zur Adressierung eines Datenspeichers.

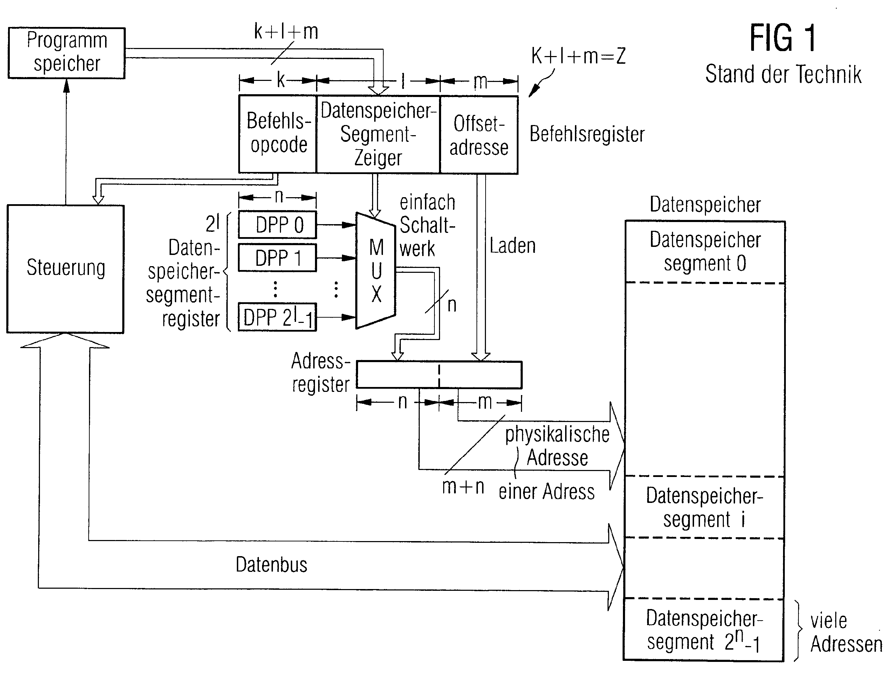

Fig. 1 zeigt eine Adressierungsvorrichtung zur Adressierung eines Datenspeichers nach dem Stand der Technik.

In einem Programmspeicher sind eine Vielzahl von Befehlen abgespeichert, die bei der Ausführung des Programms über Datenleitungen in ein Befehlsregister geladen werden. Der in das Befehlsregister geladene Programmbefehl besteht aus einem Befehls-Opcode, einem Datenspeichersegmentzeiger und einer Offset-Adresse. Der Befehls-Opcode wird zur Ausführung des Befehls in eine zentrale Steuerung beispielsweise einen Mikroprozessor geladen. Der Datenspeichersegmentzeiger steuert einen Multiplexer, der eingangsseitig an mehrere Datenspeichersegmentregister angeschlossen ist. In Abhängigkeit von dem Datenspeichersegmentzeiger schaltet der Multiplexer ein Datenspeichersegmentregister an seinem Ausgang durch. Auf diese Weise wird der Dateninhalt des durchgeschalteten Datenspeichersegmentregisters als höherwertige Adressenbits in ein Adressregister eingeschrieben, wobei der Dateninhalt des durchgeschalteten Datenspeichersegmentregisters das adressierte Datenspeichersegment des Datenspeichers angibt. Die in dem Befehlsregister enthaltenen Offset-Adressenbits werden als niederwertige Adressenbits direkt in das Adressregister kopiert. In dem Adressregister ist die physikalische Adresse zur Adressierung eines Datenspeicherelements innerhalb des Datenspeichers zwischengespeichert. Dabei setzt sich die physikalische Adresse aus der Anfangsadresse des adressierten Datenspeichersegments und der Offset-Adresse zusammen.

Besteht der Datenspeichersegmentzeiger aus L-Datenbits können 2^{L}-Datenspeichersegmentregister ausgewählt werden, so dass auch höchstens 2^{L}-Datenspeichersegmente innerhalb des Datenspeichers adressiert werden können, wenn der Dateninhalt der Datenspeichersegmentregister während des Programmablaufs nicht modifiziert wird.

Die nachfolgende Tabelle zeigt ein einfaches Beispiel mit vier Datenspeichersegmentregistern zur Bestimmung der höherwertigen Adressenbits einer physikalischen Adresse mit 24 Bit Breite.

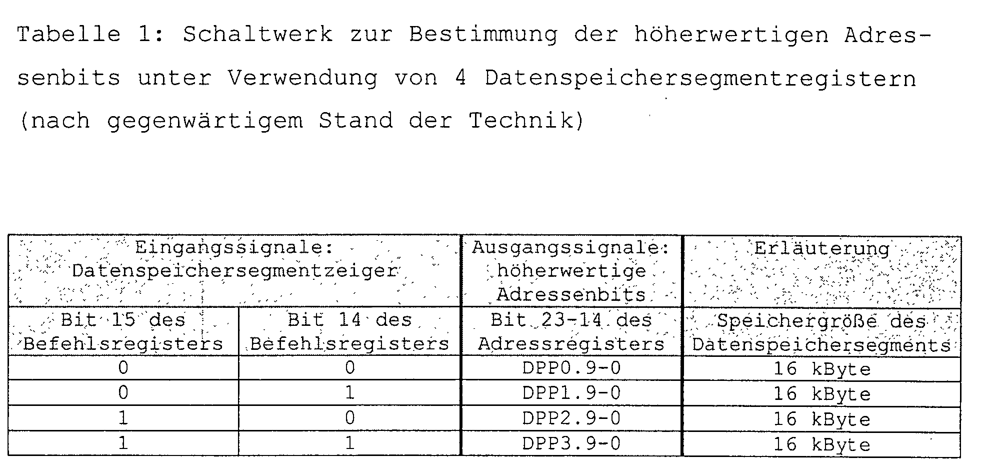

- DPP0.9-0: Bits 9-0 des Datenspeichersegmentregisters DPP0
- DPP1.9-0: Bits 9-0 des Datenspeichersegmentregisters DPP1
- DPP2.9-0: Bits 9-0 des Datenspeichersegmentregisters DPP2
- DPP3.9-0: Bits 9-0 des Datenspeichersegmentregisters DPP3
- 16 kByte = 16 * 1024 Byte = 2¹³ Byte

Bei dem oben gezeigten Beispiel umfasst der Datenspeichersegmentzeiger zwei Bits, nämlich die Bitpositionen 14, 15 innerhalb des Befehlsregisters und die Offset-Adresse 14 Bit, nämlich die Bitpositionen 0-13 innerhalb des Befehlsregisters. Durch den Datenspeichersegmentzeiger können vier verschiedene Datenspeichersegmentregister DPP0 - DPP3 adressiert werden. Jedes dieser Datenspeichersegmentregister weist eine Bitbreite von 10 Bits auf. In dem Adressregister wird eine physikalische Adresse gebildet mit einer Bitbreite von 24 Bit, wobei die höherwertigen 10 Bit gemäß Tabelle 1 aus einem Datenspeichersegmentregister eingeschrieben werden und die niedrigwertigen 14 Bit aus der Offset-Adresse des Befehlsregisters kopiert werden. Die Segmentgröße des adressierten Datenspeichersegments ergibt sich durch die Berechnungsvorschrift (2^{Z-1}) wobei z die Bitbreite der Offset-Adresse, so dass sich in diesem Fall für z=14 eine Segmentgröße von 2¹⁴⁻¹ Bytes = 16 kByte errechnet.

Die in Fig. 1 dargestellte Adressierungsvorrichtung nach dem Stand der Technik hat den Nachteil, dass die Anzahl der adressierbaren Datenspeichersegmentregister sowie die Speichergröße der einzelnen Datenspeichersegmente festgelegt ist. Daher ist die Adressierung sehr unflexibel. Bei dem oben in der Tabelle angegebenen Beispiel können vier Datenspeichersegmentregister adressiert werden, so dass auf vier Datenspeichersegmente des Datenspeichers, die jeweils eine feste Speichergröße von 16 kByte aufweisen, zugegriffen werden kann.

Darüber hinaus hat die Adressierungsvorrichtung nach dem Stand der Technik, wie sie in Fig. 1 dargestellt ist, den Nachteil, dass die Programmierung eines auszuführenden Programms sehr aufwendig ist. Muss beispielsweise während eines Programmablaufs bei dem obigen Beispiel mit vier Datenspeichersegmentregistern das Programm auf mehr als vier verschiedene Datenspeichersegmente zugreifen, so ist dies nur durch zusätzlichen Aufwand möglich. Hierzu muss der Dateninhalt eines Datenspeichersegmentregisters durch Ausführung eines weiteren Programmbefehls geändert werden. Der Programmcode für diese zusätzlichen Programmbefehle muss ebenfalls in dem Programmspeicher abgelegt sein. Hierdurch wird der Speicherplatzbedarf innerhalb des Programmspeichers erhöht und die Ausführungszeit des Programms nimmt ebenfalls zu.

Es wurde daher vorgeschlagen, die Bitbreite des Datenspeichersegmentzeigers innerhalb des Programmbefehls zu erhöhen um so zwischen mehr Datenspeichersegmentregistern auswählen zu können, so dass auf zusätzliche Datenspeichersegmente des Datenspeichers zugegriffen werden kann.

Tabelle 2 zeigt die Bestimmung der höherwertigen Adressenbits einer physikalischen Adresse mit 24 Bit bei einem Datenspeichersegmentzeiger mit drei Bit, nämlich den Bitpositionen 13-15 innerhalb des Befehlsregisters, und einer Offset-Adresse mit 13 Bit, nämlich den Bitpositionen 0-12 innerhalb des Befehlsregisters. Die Anzahl der adressierbaren Datenspeichersegmentregister hat sich gegenüber dem in der Tabelle 1 dargestellten Beispiel verdoppelt, da ein zusätzliches Bit im Datenspeichersegmentzeiger vorhanden ist. Die Datenspeichersegmentgröße hat sich gegenüber dem in der Tabelle 1 dargestellten Beispiel halbiert, da die Bitbreite der Offset-Adresse um 1 reduziert ist. Die Summe aus der Bitbreite des Datenspeichersegmentzeigers und der Bitbreite der Offset-Adresse ist unverändert zu dem in Tabelle 1 dargestellten Beispiel.

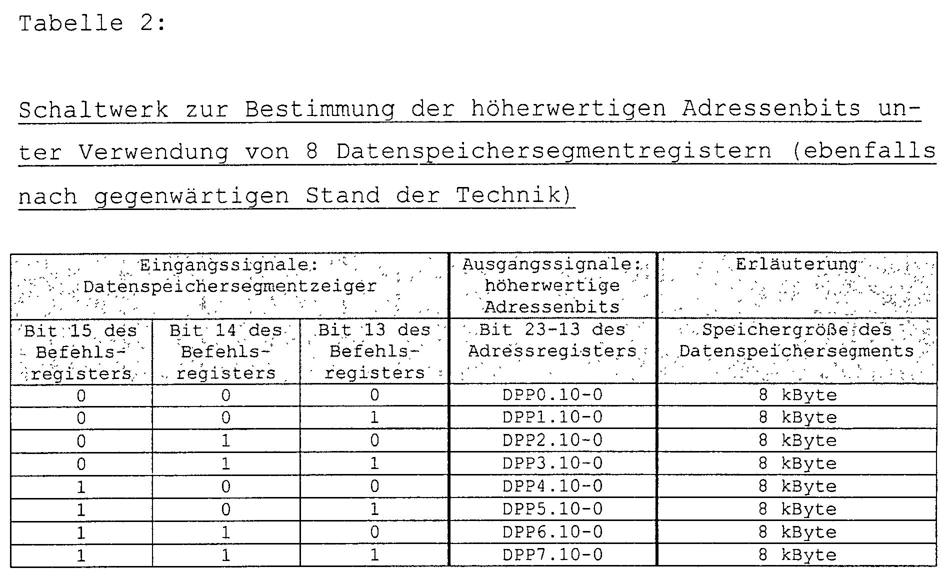

- DPP0.10-0: Bits 10-0 des Datenspeichersegmentregisters DPP0
- DPP1.10-0: Bits 10-0 des Datenspeichersegmentregisters DPP1
- DPP2.10-0: Bits 10-0 des Datenspeichersegmentregisters DPP2
- DPP3.10-0: Bits 10-0 des Datenspeichersegmentregisters DPP3
- DPP4.10-0: Bits 10-0 des Datenspeichersegmentregisters DPP4
- DPP5.10-0: Bits 10-0 des Datenspeichersegmentregisters DPP5
- DPP6.10-0: Bits 10-0 des Datenspeichersegmentregisters DPP6
- DPP7.10-0: Bits 10-0 des Datenspeichersegmentregisters DPP7
- 8 KByte = 8 * 1024 Byte = 2¹² Byte

Bei dem Beispiel gemäß Tabelle 2 können acht verschiedene Datenspeichersegmentregister DPP0 - DPP7 durch den Datenspeichersegmentzeiger adressiert werden. Jedes Datenspeichersegmentregister weist eine Bitbreite von 11 Bit auf. In dem Adressregister wird eine physikalische Adresse gebildet mit einer Bitbreite von 24 Bit, wobei die höherwertigen 11 Bit gemäß Tabelle 2 aus einem Datenspeichersegmentregister eingeschrieben werden und die niedrigwertigen 13 Bit aus der Offset-Adresse des Befehlsregisters kopiert werden. Die Segmentgröße des adressierten Datenspeichersegments ergibt sich durch die Berechnungsvorschrift (2^{z-1}) wobei z die Bitbreite der Offset-Adresse ist, so dass sich in diesem Fall für z=13 eine Segmentgröße von 2¹³⁻¹ Bytes = 8 kByte errechnet.

Eine derartige Adressierungsvorrichtung hat jedoch den Nachteil, dass keine Programmcode-Kompatibilität zu bisherigen Programmen gegeben ist. Existierende Programme, die beispielsweise für eine Adressierungsvorrichtung nach Tabelle 1 geschrieben wurden, sind derart geschrieben, dass das Bit 13 innerhalb des Befehlsregisters unverändert in das Adressregister kopiert wird. Wird die Bitbreite der Offset-Adresse zur Erhöhung der Bitbreite des Datenspeichersegmentzeigers verringert, wie dies in Tabelle 2 geschehen ist, sind existierende Programme auf einer derartigen Adressierungsvorrichtung nicht mehr lauffähig und erfordern eine Anpassung an die geänderte Adressierungsvorrichtung.

Es ist daher die Aufgabe der vorliegenden Erfindung eine Adressierungsvorrichtung zur Adressierung eines Datenspeichers zu schaffen, bei dem die Anzahl der verfügbaren Datenspeichersegmentregister erhöht wird und die dennoch gewährleistet, dass bestehende Programme weiterhin lauffähig sind.

Diese Aufgabe wird erfindungsgemäß durch eine Adressierungsvorrichtung mit den in Patentanspruch 1 angegebenen Merkmalen gelöst.

Die Erfindung schafft eine Vorrichtung zur Adressierung eines Datenspeichers, wobei die Vorrichtung aufweist:
ein Befehlsregister zum Zwischenspeichern eines Programmbefehls, der einen Befehls-Opcode, einen Speicherkonfigurationsauswahlzeiger zur Auswahl eines Speicherkonfigurationsregisterfeldes. Konfigurationsbits und Offset-Adressenbits umfasst,
ein Speicherkonfigurationsregister, das mehrere Speicherkonfigurationsregisterfelder umfasst, die verschiedene Abbildungsbefehle zur Generierung einer Datenspeicheradresse des Datenspeichers speichern,
mehrere Datenspeichersegmentregister, die jeweils höherwertige Adressenbits einer Anfangsadresse eines Datenspeichersegments speichern, mindestens ein Zusatz-Datenspeichersegmentregister, das höherwertige Adressenbits einer Anfangsadresse eines Datenspeichersegments speichert, und
ein Schaltwerk, das in Abhängigkeit von dem aus dem Befehlsregister ausgelesenen Speicherkonfigurationsauswahlzeiger den Abbildungsbefehl aus dem ausgewählten Speicherkonfigurationsregisterfeld ausliest und entsprechend dem ausgelesenen Abbildungsbefehl und in Abhängigkeit von den aus dem Befehlsregister ausgelesenen Konfigurationsbits die höherwertigen Adressenbits aus einem Datenspeichersegmentregister oder einem Zusatz-Datenspeichersegmentregister und aus den aus dem Befehlsregister ausgelesenen Konfigurationsbits zusammensetzt und in ein Adressregister, das eine Datenspeicheradresse zur Adressierung des Datenspeichers zwischenspeichert, einschreibt,
wobei die niedrigwertigen Adressenbits des Adressregisters aus den in dem Befehlsregister zwischengespeicherten Offset-Adressenbits entnommen werden.

Bei einer weiteren bevorzugten Ausführungsform der erfindungsgemäßen Adressierungsvorrichtung gibt das Speicherkonfigurationsregisterfeld eine Abbildungsvorschrift an, die für jedes einzelne Bit der im Befehlsregister gespeicherten Konfigurationsbits festlegt, ob dieses als Offset-Adressenbit oder als Auswahlbit zur Auswahl eines Datenspeichersegmentregisters / Zusatz-Datenspeichersegmentregister zu interpretieren ist, und außerdem festlegt, welche Datenspeichersegmentregister / Zusatz-Datenspeichersegmentregister noch zur Auswahl stehen.

Bei einer weiteren bevorzugten Ausführungsform der erfindungsgemäßen Adressierungsvorrichtung wird jedes Bit der in dem Befehlsregister gespeicherten Konfigurationsbits entweder als Auswahlbit zur Auswahl eines Datenspeichersegmentregisters / Zusatz-Datenspeichersegmentregisters oder als Zusatz-Offset-Adressenbit interpretiert.

Bei einer weiteren bevorzugten Ausführungsform der erfindungsgemäßen Adressierungsvorrichtung werden die Zusatz-Offset-Adressenbits durch das Schaltwerk in die höherwertigen Adressenbits des Adressregisters eingeschrieben.

Bei einer weiteren bevorzugten Ausführungsform der erfindungsgemäßen Adressierungsvorrichtung ergibt sich die Anzahl der aus dem adressierten Datenspeichersegmentregister / Zusatz-Datenspeichersegmentregister ausgelesenen Bits, die das Schaltwerk in die höherwertigen Adressenbits des Adressregisters einschreibt, durch die Berechnungsvorschrift (h-o), wobei h die Anzahl der höherwertigen Adressenbits des Adressregisters ist und o die Anzahl der Zusatz-Offset-Adressenbits ist.

Eine weitere bevorzugte Ausführungsform der erfindungsgemäßen Adressierungsvorrichtung weist ein Schaltwerk auf, das die höherwertigen Adressenbits aus den Zusatz-Offset-Adressenbits und den aus dem ausgewähltem Datenspeichersegmentregister /Zusatz-Datenspeichersegmentregister ausgelesenen Bits zusammensetzt.

In dem Befehlsregister sind vorzugsweise Offset-Adressenbits, Konfigurationsbits, Auswahlbits und Opcode-Bits zwischengespeichert.

Die Anzahl der höherwertigen Adressenbits ist vorzugsweise konstant. Die Anzahl der niedrigwertigen Adressenbits ist vorzugsweise konstant. Die Speichergröße des adressierten Datenspeichersegments ergibt sich durch die Berechnungsvorschrift (2^{o+z-1}), wobei o die Anzahl der Offset-Adressenbits ist, und z die Anzahl der Zusatz-Offset-Adressenbits ist.

Im weiteren ist eine bevorzugte Ausführungsform der erfindungsgemäßen Adressierungsvorrichtung unter Bezugnahme auf die beigefügten Figuren zur Erläuterung erfindungswesentlicher Merkmale beschrieben.

Es zeigen
- Fig. 1: eine Adressierungsvorrichtung für einen Datenspeicher nach dem Stand der Technik;
- Fig. 2: ein Blockschaltbild mit einer erfindungsgemäßen Adressierungsvorrichtung für einen Datenspeicher.

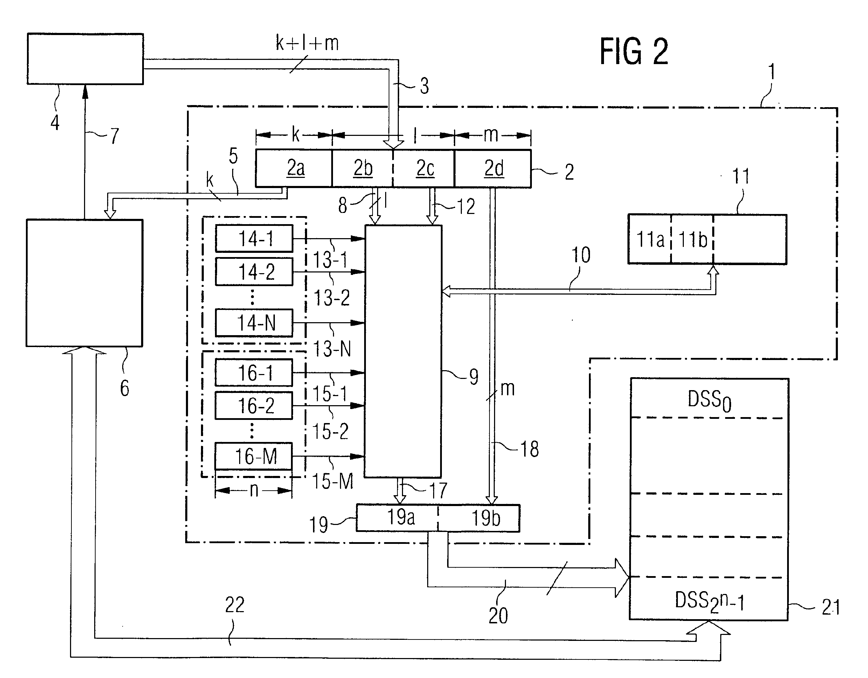

Fig. 2 zeigt eine Adressierungsvorrichtung 1 gemäß der Erfindung mit einem Befehlsregister 2, das über Datenleitungen 3 mit einem Programmspeicher 4 verbunden ist. In das Befehlsregister 2 werden über die Datenleitungen 3 die auszuführenden Programmbefehle aus dem Programmspeicher 4 eingeschrieben. Der in das Befehlsregister 2 eingeschriebene Programmbefehl umfasst einen Befehls-Opcode mit k Datenbits, die in einen ersten Bereich 2a des Befehlsregisters eingeschrieben werden. Die Befehls-Opcode Datenbits werden über Leitungen 5 in eine zentrale Steuerung 6, beispielsweise einen Mikroprozessor, eingeschrieben, die den kodierten Befehl ausführt. Die zentrale Steuerung steuert über Steuerleitungen 7 den Programmspeicher 4 somit den Programmablauf. Der Programmbefehl enthält neben den Befehls-Opcode-Bits einen Speicherkonfigurationsauswahlzeiger, der aus mehreren Auswahlbits besteht, die in einen zweiten Bereich 2b des Befehlsregisters eingeschrieben werden. Der Programmbefehl enthält Konfigurationsbits, die in einem dritten Bereich 2c des Befehlsregisters 2 eingeschrieben werden. Darüber hinaus enthält der aus dem Programmspeicher 4 ausgelesene Befehl Offset-Adressenbits, die in einen vierten Bereich 2d des Befehlsregisters 2 eingeschrieben werden. Der Bereich 2d ist über Datenleitungen 18 mit einem Adressregister 19 zum Kopieren der Offset-Adressenbits verbunden.

Der in dem Bereich 2b des Befehlsregisters 2 eingeschriebene Speicherkonfigurationsauswahlzeiger, der L Auswahlbits umfasst, wird über Leitungen 8 durch ein Schaltwerk 9 eingelesen, das über Leitungen 10 mit einem Speicherkonfigurationsregister 11 verbunden ist. Das Speicherkonfigurationsregister 11 umfasst mehrere Speicherkonfigurationsregisterfelder 11a, 11b ... Jedes Speicherkonfigurationsregisterfeld innerhalb des Speicherkonfigurationsregisters 11 gibt eine gewünschte Abbildungsvorschrift zur Generierung einer Datenspeicheradresse des Datenspeichers an. Jedes einzelne Bit der Konfigurationsbits 2c wird abhängig von der durch die L Auswahlbits selektierten Abbildungsvorschrift bzw. dem Abbildungsbefehl durch das Schaltwerk 9 entweder als Zusatz-Offset-Adressenbit oder als Auswahlbit zur Auswahl eines Datenspeichersegmentregisters / Zusatz-Datenspeichersegmentregisters interpretiert, wobei durch die selektierte Abbildungsvorschrift festgelegt ist, welche Datenspeichersegmentregister / Zusatz-Datenspeichersegmentregister noch zur Auswahl stehen.

Das Schaltwerk 9 ist ferner über Datenleitungen 12 mit dem dritten Bereich 2c des Befehlsregisters 2 zum Laden der darin enthaltenen Konfigurationsbits verbunden. Das Schaltwerk 9 ist über Datenleitungen 13 mit N Datenspeichersegmentregistern 14 verbunden. Darüber hinaus ist das Schaltwerk 9 über Leitungen 15 an M zusätzliche Zusatz-Datenspeichersegmentregister 16 angeschlossen. Der in dem Speicherbereich 2b des Befehlsregisters 2 zwischengespeicherte Speicherkonfigurationsauswahlzeiger des geladenen Befehls wird durch das Schaltwerk 9 eingelesen, das den Dateninhalt des durch den Speicherkonfigurationsauswahlzeiger adressierten Speicherkonfigurationsregisterfeldes 11-i innerhalb des Speicherkonfigurationsregisters 11 ausliest. In dem Speicherkonfigurationsregisterfeld 11-i ist angegeben, welche Datenspeichersegmentregister / Zusatz-Datenspeichersegmentregister für die Generierung der Datenspeicheradresse noch zur Auswahl stehen. Ferner gibt die in dem Speicherkonfigurationsregisterfeld 11-i abgelegte Abbildungsvorschrift für jedes einzelne Bit der Konfigurationsbits 2c an, ob dieses als Auswahlbit zur Auswahl eines Datenspeichersegmentregisters / Zusatz-Datenspeichersegmentregisters zu interpretieren ist oder als Zusatz-Offset-Adressenbit zu interpretieren ist. Die Anzahl der aus dem adressierten Datenspeichersegmentregister / Zusatz-Datenspeichersegmentregister ausgelesenen Bits, die das Schaltwerk zusammen mit den Zusatz-Offset-Adressenbits in die höherwertigen Adressenbits des Adressregisters 19 einschreibt, ergibt sich durch die Berechnungsvorschrift (h-o), wobei h die Anzahl der höherwertigen Adressenbits des Adressregisters ist und o die Anzahl der Zusatz-Offset-Adressenbits ist.

In dem Adressregister 19 ist die physikalische Adresse zur Adressierung eines Datenspeicherelements innerhalb des Datenspeichers zwischengespeichert. Das Adressregister 19 ist unterteilt in höherwertige Adressenbits 19a und niederwertige Adressenbits 19b. Das Adressregister 19 ist über Adressenleitungen 20 an einen Datenspeicher 21 angeschlossen, der über einen Datenbus 22 mit der Steuerung 6 verbunden ist.

Das Schaltwerk 9 ist über Datenleitungen 17 mit den höherwertigen Adressenbits 19a des Adressregisters 19 verbunden. Die niedrigwertigen Adressenbits 19b des Adressregisters 19 sind mit dem Bereich 2d des Befehlsregisters verbunden.

Das Schaltwerk 9 setzt die höherwertigen Adressenbits 19a der in dem Adressregister 19 zwischengespeicherte physikalische Adresse in Abhängigkeit von der aus dem Speicherkonfigurationsregisterfeld 11-i ausgelesen Abbildungsvorschrift zusammen. Die höherwertigen Adressenbits werden durch das Schaltwerk 9 aus den Zusatz-Offset-Adressenbits, die in Abhängigkeit von der Abbildungsvorschrift aus den Konfigurationsbits 2c ausgelesen werden, und aus den Bits, die aus dem ausgewähltem Datenspeichersegmentregister 14-i / Zusatz-Datenspeichersegmentregister 16-i ausgelesen werden, zusammengesetzt und über Leitungen 17 in den Bereich 19a des Adressregisters 19 eingeschrieben.

Die Bitbreite der Felder 19a und 19b des Adressregisters 19 ist stets konstant, wodurch auch die Bitbreite des Adressregisters 19 stets konstant bleibt.
Die Speichergröße des adressierten Datenspeichersegments ergibt sich durch die Berechnungsvorschrift (2^{o+z-1}), wobei o die Anzahl der Offset-Adressenbits ist, und z die Anzahl der Zusatz-Offset-Adressenbits ist.

Die Tabellen 3, 4, 5 und 6 beschreiben eine bevorzugte Ausführungsform des Schaltwerks 9 innerhalb der erfindungsgemäßen Adressierungsvorrichtung 1.

Der Speicherkonfigurationsauswahlzeiger umfasst in dem gezeigten Beispiel zwei Bits, nämlich die Bitpositionen 14, 15 innerhalb des Befehlsregisters 2, die Konfigurationsbits ein einzelnes Bit, nämlich Bit 13 innerhalb des Befehlsregisters 2 und die Offset-Adresse 13 Bits, nämlich die Bitpositionen 0-12 innerhalb des Befehlsregisters 2.
Das Speicherkonfigurationsregister 11 enthält in dem gezeigten Beispiel vier Speicherkonfigurationsregisterfelder, die als DPP0SEL, DPP1SEL, DPP2SEL, DPP3SEL bezeichnet werden.

Das Schaltwerk 9 liest über die Leitungen 8 den Speicherkonfigurationsauswahlzeiger ein, der in dem gezeigten Beispiel die Bits 14 - 15 innerhalb des Befehlsregisters 2 umfasst. Das Schaltwerk 9 liest entsprechend dem anliegenden Speicherkonfigurationsauswahlzeiger die Abbildungsvorschrift aus dem adressierten Speicherkonfigurationsregisterfeld des Speicherkonfigurationsregisters 11 aus und bildet in Abhängigkeit der dort angegebenen Speicherkonfiguration die physikalische Adresse, die in das Adressregister 19 eingeschrieben wird.
In dem gezeigten Beispiel wird das Speicherkonfigurationsregisterfeld DPP0SEL adressiert, wenn Bit 15 des Befehlsregisters = 0 und Bit 14 des Befehlsregisters = 0, und in diesem Fall wird die Abbildungsvorschrift zur Bestimmung der höherwertigen Bits der physikalischen Adresse gemäß Tabelle 3 ausgeführt.
Das Speicherkonfigurationsregisterfeld DPP1SEL wird adressiert, wenn Bit 15 des Befehlsregisters = 0 und Bit 14 des Befehlsregisters = 1, und in diesem Fall wird die Abbildungsvorschrift zur Bestimmung der höherwertigen Bits der physikalischen Adresse gemäß Tabelle 4 ausgeführt.
Das Speicherkonfigurationsregisterfeld DPP2SEL wird adressiert, wenn Bit 15 des Befehlsregisters = 1 und Bit 14 des Befehlsregisters = 0, und in diesem Fall wird die Abbildungsvorschrift zur Bestimmung der höherwertigen Bits der physikalischen Adresse gemäß Tabelle 5 ausgeführt.
Das Speicherkonfigurationsregisterfeld DPP3SEL wird adressiert, wenn Bit 15 des Befehlsregisters = 1 und Bit 14 des Befehlsregisters = 1, und in diesem Fall wird die Abbildungsvorschrift zur Bestimmung der höherwertigen Bits der physikalischen Adresse gemäß Tabelle 6 ausgeführt.

Der Inhalt des Speicherkonfigurationsregisterfeldes gibt für jedes einzelne Konfigurationsbits des Befehlsregisters an, ob es als Auswahlbit zur Auswahl eines Datenspeichersegmentregisters / Zusatz-Datenspeichersegmentregisters oder als Zusatz-Offset-Adressenbit zu interpretieren ist, und legt außerdem fest, welche Datenspeichersegmentregister / Zusatz-Datenspeichersegmentregister noch zur Auswahl stehen.

In dem gezeigten Beispiel gibt das Speicherkonfigurationsregisterfeld DPPCON0 gemäß Tabelle 3 an, ob Bit 13 des Befehlsregisters, in dem das Konfigurationsbit gespeichert ist, als Auswahlbit oder Zusatz-Offset-Adressenbit zu interpretieren ist. Falls dieses Bit als Zusatz-Offset-Adressenbit interpretiert wird, so wird das Datenspeichersegmentregister DPP0 adressiert (siehe Zeile 3 der Tabelle 3), wobei in diesem Fall 10 Bits aus dem Datenspeichersegmentregister DPP0 ausgelesen werden und zusammen mit dem Zusatz-Offset-Adressenbit in die 11 höherwertigen Bits des Adressregisters eingeschrieben werden. Wird Bit 13 des Befehlsregisters dagegen als Auswahlbit interpretiert, so wird über dieses Bit zwischen dem Datenspeichersegmentregister DPP0 und dem Zusatz-Datenspeichersegmentregister EDPP0 ausgewählt, und gemäß der Zeilen 4 und 5 in der Tabelle 3 werden 11 Bit des adressierten Datenspeichersegmentregisters / Zusatz-Datenspeichersegmentregisters ausgelesen und in die höherwertigen Bits des Adressregister eingeschrieben.

In dem gezeigten Beispiel gibt das Speicherkonfigurationsregisterfeld DPPCON1 gemäß Tabelle 4 an, ob Bit 13 des Befehlsregisters, in dem das Konfigurationsbit gespeichert ist, als Auswahlbit oder Zusatz-Offset-Adressenbit zu interpretieren ist. Falls dieses Bit als Zusatz-Offset-Adressenbit interpretiert wird, so wird das Datenspeichersegmentregister DPP1 adressiert (siehe Zeile 3 der Tabelle 4), wobei in diesem Fall 10 Bits aus dem Datenspeichersegmentregister DPP1 ausgelesen werden und zusammen mit dem Zusatz-Offset-Adressenbit in die 11 höherwertigen Bits des Adressregisters eingeschrieben werden. Wird Bit 13 des Befehlsregisters dagegen als Auswahlbit interpretiert, so wird über dieses Bit zwischen dem Datenspeichersegmentregister DPP1 und dem Zusatz-Datenspeichersegmentregister EDPP1 ausgewählt, und gemäß der Zeilen 4 und 5 in der Tabelle 4 werden 11 Bit des adressierten Datenspeichersegmentregisters / Zusatz-Datenspeichersegmentregisters ausgelesen und in die höherwertigen Bits des Adressregister eingeschrieben.

In dem gezeigten Beispiel gibt das Speicherkonfigurationsregisterfeld DPPCON2 gemäß Tabelle 5 an, ob Bit 13 des Befehlsregisters, in dem das Konfigurationsbit gespeichert ist, als Auswahlbit oder Zusatz-Offset-Adressenbit zu interpretieren ist. Falls dieses Bit als Zusatz-Offset-Adressenbit interpretiert wird, so wird das Datenspeichersegmentregister DPP1 adressiert (siehe Zeile 3 der Tabelle 5), wobei in diesem Fall 10 Bits aus dem Datenspeichersegmentregister DPP2 ausgelesen werden und zusammen mit dem Zusatz-Offset-Adressenbit in die 11 höherwertigen Bits des Adressregisters eingeschrieben werden. Wird Bit 13 des Befehlsregisters dagegen als Auswahlbit interpretiert, so wird über dieses Bit zwischen dem Datenspeichersegmentregister DPP2 und dem Zusatz-Datenspeichersegmentregister EDPP2 ausgewählt, und gemäß der Zeilen 4 und 5 in der Tabelle 5 werden 11 Bit des adressierten Datenspeichersegmentregisters / Zusatz-Datenspeichersegmentregisters ausgelesen und in die höherwertigen Bits des Adressregister eingeschrieben.

In dem gezeigten Beispiel gibt das Speicherkonfigurationsregisterfeld DPPCON3 gemäß Tabelle 6 an, ob Bit 13 des Befehlsregisters, in dem das Konfigurationsbit gespeichert ist, als Auswahlbit oder Zusatz-Offset-Adressenbit zu interpretieren ist. Falls dieses Bit als Zusatz-Offset-Adressenbit interpretiert wird, so wird das Datenspeichersegmentregister DPP1 adressiert (siehe Zeile 3 der Tabelle 6), wobei in diesem Fall 10 Bits aus dem Datenspeichersegmentregister DPP3 ausgelesen werden und zusammen mit dem Zusatz-Offset-Adressenbit in die 11 höherwertigen Bits des Adressregisters eingeschrieben werden. Wird Bit 13 des Befehlsregisters dagegen als Auswahlbit interpretiert, so wird über dieses Bit zwischen dem Datenspeichersegmentregister DPP3 und dem Zusatz-Datenspeichersegmentregister EDPP3 ausgewählt, und gemäß der Zeilen 4 und 5 in der Tabelle 6 werden 11 Bit des adressierten Datenspeichersegmentregisters / Zusatz-Datenspeichersegmentregisters ausgelesen und in die höherwertigen Bits des Adressregister eingeschrieben.

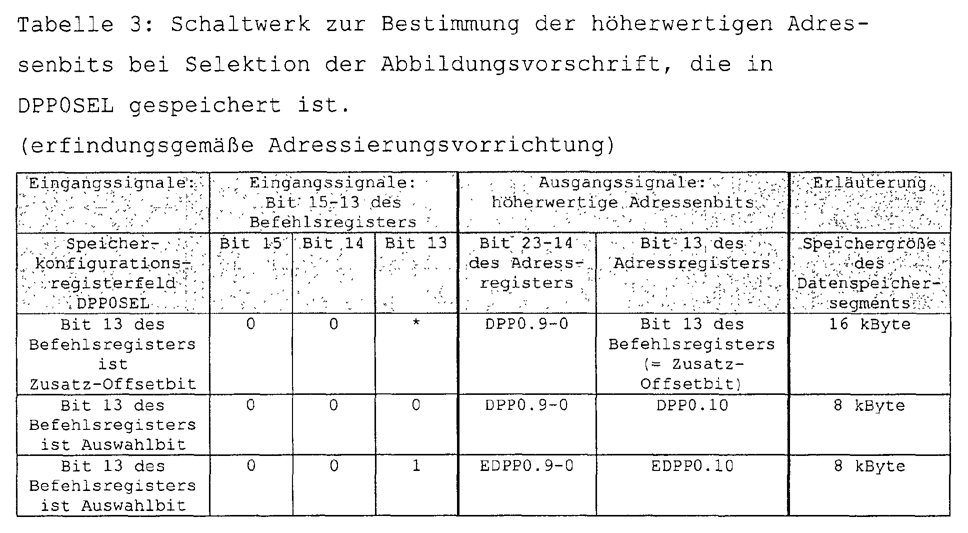

wobei
- DPP0.9-0: Bits 9-0 des Datenspeichersegmentregisters DPP0
- DPP0.10: Bit 10 des Datenspeichersegmentregisters DPP0
- EDPP0.9-0: Bits 9-0 des Zusatz-Datenspeichersegmentregisters EDPP0
- EDPP0.10: Bit 10 des Zusatz-Datenspeichersegmentregisters EDPP0 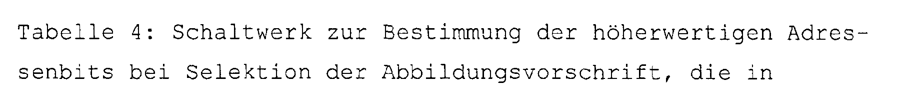 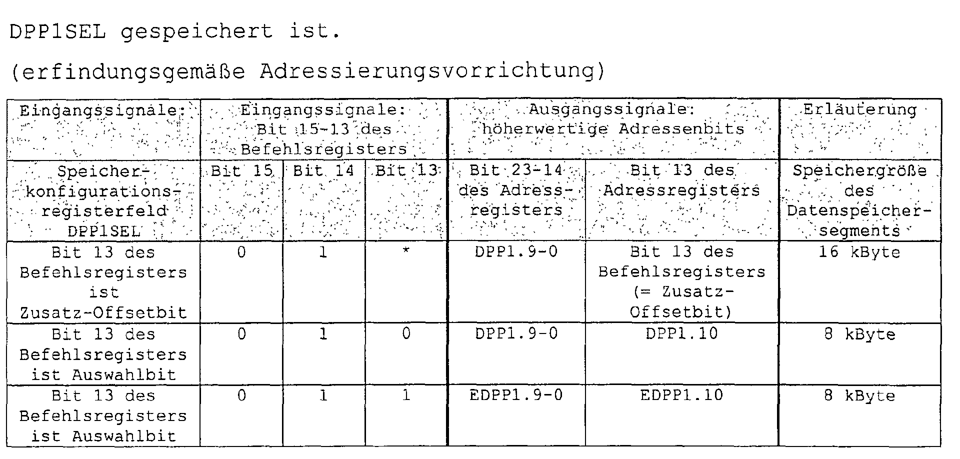
wobei
- DPP1.9-0: Bits 9-0 des Datenspeichersegmentregisters DPP1
- DPP1.10: Bit 10 des Datenspeichersegmentregisters DPP1
- EDPP1.9-0: Bits 9-0 des Zusatz-Datenspeichersegmentregisters EDPP1
- EDPP1.10: Bit 10 des Zusatz-Datenspeichersegmentregisters EDPP1 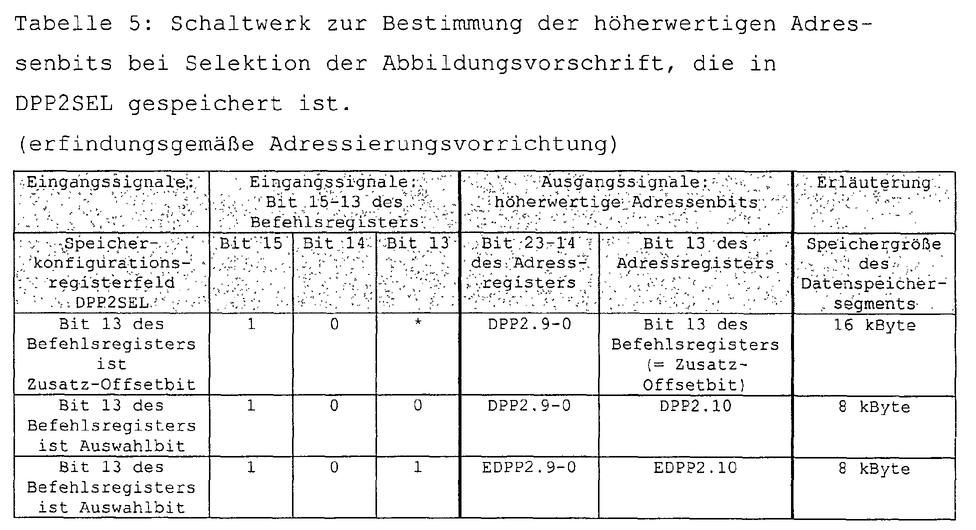
wobei
- DPP2.9-0: Bits 9-0 des Datenspeichersegmentregisters DPP2
- DPP2.10: Bit 10 des Datenspeichersegmentregisters DPP2
- EDPP2.9-0: Bits 9-0 des Zusatz-Datenspeichersegmentregisters EDPP2
- EDPP2.10: Bit 10 des Zusatz-Datenspeichersegmentregisters EDPP2 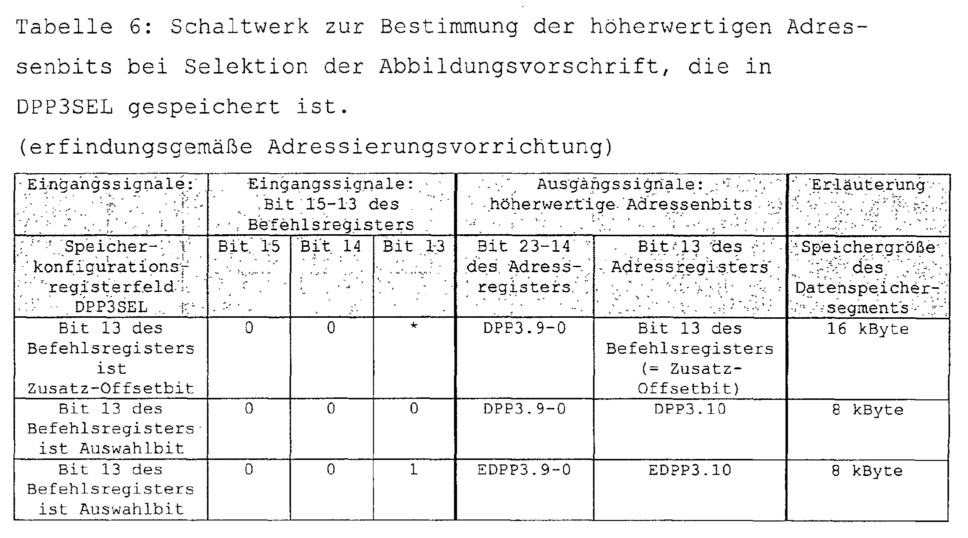
wobei
- DPP3.9-0: Bits 9-0 des Datenspeichersegmentregisters DPP3
- DPP3.10: Bit 10 des Datenspeichersegmentregisters DPP3
- EDPP3.9-0: Bits 9-0 des Zusatz-Datenspeichersegmentregisters EDPP3
- EDPP3.10: Bit 10 des Zusatz-Datenspeichersegmentregisters EDPP3

Durch die in den Tabellen 3, 4, 5 und 6 dargestellte Implementierung ist die Kompatibilität zu einem existierenden Programmcode, der für eine Adressierungsvorrichtung nach dem Stand der Technik, wie beispielsweise in Fig. 1 dargestellt ist, geschrieben wurde, gewährleistet.

Durch das Speicherkonfigurationsregister 11 ist es möglich die Anzahl der Datenspeichersegmente innerhalb des Datenspeichers 21 entsprechend einer gewünschten Speicherkonfiguration zu erhöhen und gleichzeitig die Ablauffähigkeiten von bisher bestehenden Programmen zu gewährleisten. Durch die Erhöhung der Anzahl von Datenspeichersegmenten ist es möglich neue Programme zu schreiben, die auf viele Datenspeichersegmente gleichzeitig zugreifen ohne dass die Speicheranforderungen des Programms steigen.

### Bezugszeichenliste

- 1: Adressierungsvorrichtung
- 2: Befehlsregister
- 3: Leitungen
- 4: Programmspeicher
- 5: Leitungen
- 6: Zentrale Steuerung
- 7: Steuerleitungen
- 8: Leitungen
- 9: Schaltwerk
- 10: Leitungen
- 11: Speicherkonfigurationsregister
- 12: Leitungen
- 13: Leitungen
- 14: Datenspeichersegmentregister
- 15: Leitungen
- 16: Zusatz-Datenspeichersegmentregister
- 17: Leitungen
- 18: Leitungen
- 19: Adressregister
- 20: Adressenleitungen
- 21: Datenspeicher

## Patentansprüche

1. Vorrichtung zur Adressierung eines Datenspeichers (21), wobei die Vorrichtung (1) aufweist:
(a) ein Befehlsregister (2) zum Zwischenspeichern eines Programmbefehls, der
einen Befehls-Opcode (2a), einen Speicherkonfigurationsauswahlzeiger (2b) zur Auswahl eines Speicherkonfigurationsregisterfeldes. Konfigurationsbits (2c) und Offset-Adressenbits (2d) umfasst;
(b) ein Speicherkonfigurationsregister (11), das mehrere Speicherkonfigurationsregisterfelder (11-i) umfasst, die verschiedene Abbildungsbefehle zur Generierung einer Datenspeicheradresse des Datenspeichers (21) speichern;
(c) mehreren Datenspeichersegmentregistern (14), die jeweils höherwertige Adressenbits einer Anfangsadresse eines Datenspeichersegments speichern, mindestens ein Zusatz-Datenspeichersegmentregister (16), das höherwertige Adressenbits einer Anfangsadresse eines Datenspeichersegments speichert,
(d) ein Schaltwerk (9), das in Abhängigkeit von dem aus dem Befehlsregister (2) ausgelesenen Speicherkonfigurationsauswahlzeiger (2b) den Abbildungsbefehl aus dem ausgewählten Speicherkonfigurationsregisterfeld (11-i) ausliest und entsprechend dem ausgelesenen Abbildungsbefehl jedes einzelne Bit der Konfigurationsbits (2c) entweder als Auswahlbit oder als Zusatz-Offset-Adressenbit interpretiert, und die höherwertigen Adressenbits aus dem durch die Auswahlbits selektierten Datenspeichersegmentregister (14) / Zusatz-Datenspeichersegmentregister (16) und aus den Zusatz-Offset-Adressenbits zusammensetzt und in die höherwertigen Bitpositionen eines Adressregisters (19), das eine Datenspeicheradresse zur Adressierung des Datenspeichers (21) zwischenspeichert, einschreibt,
wobei die niedrigwertigen Adressenbits des Adressregisters (19) aus den in dem Befehlsregister (2) zwischengespeicherten Offset-Adressenbits (2d) entnommen werden.

2. Vorrichtung nach Anspruch 1,
**dadurch gekennzeichnet, dass** das Speicherkonfigurationsregisterfeld (11-i) eine Abbildungsvorschrift enthält, die für jedes einzelne Bit der Konfigurationsbits (2c) festlegt, ob es als Zusatz-Offset-Adressenbit oder als Auswahlbit zur Auswahl eines Datenspeichersegmentregisters (14) bzw. Zusatz-Datenspeichersegmentregisters (16) zu interpretieren ist, und außerdem angibt, welche Datenspeichersegmentregister (14) bzw. Zusatz-Datenspeichersegmentregister (16) noch zur Auswahl stehen.

3. Vorrichtung nach einem der vorangehenden Ansprüche,
**dadurch gekennzeichnet,**
**dass** das Schaltwerk (9) die höherwertigen Adressenbits aus den Zusatz-Offset-Adressenbits, die durch die aus dem Speicherkonfigurationsregisterfeld (11-i) ausgelesenen Abbildungsvorschrift aus den Konfigurationsbits (2c), die aus dem Befehlsregister (2) ausgelesen werden, selektiert werden, und aus dem ausgewähltem Datenspeichersegmentregister (14) / Zusatz-Datenspeichersegmentregister (16) zusammensetzt.

4. Vorrichtung nach ein dem vorangehenden Ansprüche,
**dadurch gekennzeichnet, dass** die Zusatz-Offset-Adressenbits durch das Schaltwerk in die höherwertigen Adressenbits des Adressregisters (19) eingeschrieben werden.

5. Vorrichtung nach ein dem vorangehenden Ansprüche,
**dadurch gekennzeichnet,**
**dass** sich die Anzahl der aus dem adressierten Datenspeichersegmentregister / Zusatz-Datenspeichersegmentregister ausgelesenen Bits, die das Schaltwerk in die höherwertigen Adressenbits des Adressregisters einschreibt, durch die Berechnungsvorschrift (h-o) ergibt, wobei h die Anzahl der höherwertigen Adressenbits des Adressregisters ist und o die Anzahl der Zusatz-Offset-Adressenbits ist.

6. Vorrichtung nach ein dem vorangehenden Ansprüche,
**dadurch gekennzeichnet,**
**dass** in dem Befehlsregister Offset-Adressenbits (2d), Konfigurationsbits (2c), Auswahlbits (2b) und Opcode-Bits (2a) zwischengespeichert sind.

7. Vorrichtung nach einem der vorangehenden Ansprüche,
**dadurch gekennzeichnet,**
**dass** das Adressregister (19) mehrere Adressenbits umfasst, wobei die in dem Befehlsregister (2) gespeicherten Offset-Adressenbits (2d) als niederwertige Adressenbits direkt in das Adressregister (19) kopiert werden, und wobei die höherwertigen Adressenbits durch das Schaltwerk (9) in Abhängigkeit von dem Dateninhalt des durch die in dem Befehlsregister gespeicherten Auswahlbits (2b) ausgewählten Speicherkonfigurationsregisterfeldes (11-i) aus einem Datenspeichersegmentregister (14)/ Zusatz-Datenspeichersegmentregister (16) und aus dem in dem Befehlsregister (2) gespeicherten Konfigurationsbits (2c) eingeschrieben werden.

8. Vorrichtung nach ein dem vorangehenden Ansprüche,
**dadurch gekennzeichnet,**
**dass** die Anzahl der höherwertigen Adressenbits (19a) und die Anzahl der niedrigwertigen Adressenbits (19b) konstant ist.
